# EUROPEAN PATENT SPECIFICATION

(11) **EP 2 776 689 B1**
(45) Date of publication and mention of the grant of the patent: **01.02.2017**
(21) Application number: 12791516.3
(22) Date of filing: 05.11.2012
(51) Int. Cl.: F02B 37/18, F02B 43/00, F02B 37/02, F01N 3/10, F01N 3/20, F01N 13/10

(54) **ARRANGEMENT FOR REDUCING FUEL MATERIAL SLIP TO THE ATMOSPHERE IN AN INTERNAL COMBUSTION PISTON ENGINE AND METHOD OF UPGRADING AN INTERNAL COMBUSTION PISTON ENGINE**
VORRICHTUNG ZUR REDUZIERUNG VON BRENNSTOFFVERLUST IN BRENNKRAFTMASCHINE UND VERFAHREN ZUR NACHRÜSTUNG EINER BRENNKRAFTMASCHINE
DISPOSITIF DE RÉDUCTION DE FUITE DE COMBUSTIBLE DANS UN MOTEUR À COMBUSTION INTERNE ET PROCÉDÉ DE RATTRAPAGE D'UN MOTEUR À COMBUSTION INTERNE

(30) Priority: 08.11.2011 FI 20116103
(43) Date of publication of application: 17.09.2014
(73) Proprietor: Wärtsilä Finland Oy, 65380 Vaasa (FI)
(72) Inventor: HÄGGLUND, Thomas, FI-65410 Sundom (FI); LINDE, Eirik, FI-65410 Sundom (FI); WIDESKOG, Mikael, FI-65280 Vaasa (FI)
(74) Representative: Genip Oy
(86) International application number: PCT/FI2012/051076
(87) International publication number: WO 2013/068640

(56) References cited:
- EP-A1- 0 515 814
- EP-A2- 1 754 870
- WO-A1-00/03130
- FR-A1- 2 853 690
- US-A- 3 579 981
- US-A1- 2009 241 540

## Description

### Technical field

The invention relates to an arrangement for reducing fuel material slip to the atmosphere in a an internal combustion piston engine with at least two cylinders and at least one turbo charger unit, and an exhaust gas system arranged to connect a combustion chamber of each cylinder of the engine controllably by means of an exhaust valve or valves to the atmosphere via a turbine section of the at least one turbo charger unit, which arrangement comprises a fuel processing unit for oxidation of fuel material in the exhaust gas of the engine.

The invention relates further to a method of upgrading an internal combustion piston engine with at least two cylinders and at least one turbo charger unit.

### Background art

Internal combustion engine-powered generator sets fuelled by gas are gaining more attention as interest grows in on-site power production equipment that is both efficient and environmentally friendly. Gas operated internal combustion engines are gaining interest also in marine vessels like LNG-tankers, cruise vessels or multi-purpose vessels.

Gas operated piston engines may be divided into several categories by their operation principle.

Firstly, a gas operated piston engine may be a gas diesel engine. In the gas diesel engine the gas is injected according to a diesel process at high pressure. A small amount of liquid pilot fuel is injected when the engine is operating in gas mode. A gas diesel can operate on gas with pilot injection and also on liquid fuels such as diesel oil, heavy fuel oil or even crude oil. In gas mode the gas diesel is more tolerant in terms of methane number than other gas engine concepts.

In gas mode, the gas is injected at high pressure and is ignited by the flame from the pilot fuel injection. The gas-diesel engine can be switched over instantly to liquid fuel mode operation. The liquid fuel can be light fuel oil, heavy fuel oil or crude oil. In this case, the process is the same as the conventional diesel process.

A considerable disadvantage of gas diesel engine and process is the fact that the gas must be injected into very high pressure.

Secondly, a gas operated piston engine may be a dual-fuel DF engine, which is provided with two different fuel feeding systems. A pilot injection system injects a very small amount of liquid fuel to ignite the gaseous fuel when the engine is operating in gas mode. The pilot system is typically of the common rail type, which allows for very small injection amounts of the pilot fuel. Gaseous fuel in turn is admitted to the inlet air prior to its introduction to the combustion chamber.

This makes it possible to meet very stringent emission regulations, which would be impossible if a normal injection system were used. A conventional fuel injection system is used when the engine is run on liquid fuel practicing diesel process. Fuel flexibility and high efficiency are the main advantages of the dual-fuel technology.

The dual-fuel engine also utilizes the "lean-burn" otto combustion process when operating on gas. In the event of a gas supply interruption, the engine may transfer from gas to fuel oil operation. During fuel oil operation the DF engine utilizes the conventional diesel process.

Thirdly, the engine may be an externally ignited gas engine that works according to the otto-process and the "lean-burn" principle. The combustion is considered "lean" when excess air is introduced into the engine along with the fuel. Gas is introduced by adding it into the combustion air prior to feeding the mixture into the combustion chamber.

Gas operated engines, particularly externally ignited gas engine and dual-fuel engines have a drawback relating to methane slip i.e. accidental release into the atmosphere. The methane slip can be reduced to some extent by optimization of combustion process but big part of the slip originates from methane in the air/gas mixture in dead volumes in the cylinder where no combustion occurs. One example is the volume between piston and liner above the piston ring.

In WO2011002353 A1 there is shown a method of operating a dual fuel internal combustion engine of the diesel-type aiming to improve the oxidation of the fuel during the late stages of the combustion. The engine comprising a combustion chamber being at least partly delimited by a piston, a first fuel supply for a first fuel, said first fuel supply being located in or at the combustion chamber and/or in or at an inlet port thereof, and a second fuel supply for a second fuel, and the method comprising the steps of: pre-mixing said first fuel in said combustion chamber and/or in said inlet port, compressing the charge containing the first fuel to conditions that allow autoignition of the second fuel, performing a first injection of the second fuel into said combustion chamber to initiate auto-ignition of said second fuel for igniting said first fuel, thereby initiating conditions for pre-mixed flame propagation combustion of the first fuel. The method further comprises the step of performing at least one subsequent injection, said subsequent injection supplying additional kinetic energy into the combustion process to thereby enhance turbulence intensity and propagation speed of said flame and/or enhance late mixing in the combustion chamber, so as to improve late oxidation during combustion of the remaining fuel.

Unburned methane may be oxidized also in e.g. an oxidizing unit but the needed temperature is considerably high being at the range of 700 - 800 °C, which may be achieved just after the exhaust gas has exit the combustion chamber. Another challenge in successful catalytic oxidation of methane slip is the low concentration of the methane in the exhaust gas.

It is also an object of the invention to provide arrangement for reducing fuel material slip to the atmosphere in an internal combustion piston engine which operates more efficiently than prior art arrangements, one of which is discussed in US 3 579 981 A.

It is further an object of the invention to provide method of reducing fuel material slip to the atmosphere in an internal combustion piston engine.

### Disclosure of the Invention

Objects of the invention are substantially met by an arrangement for reducing fuel material slip to the atmosphere in an internal combustion piston engine according to claim 1.

According to an embodiment of the invention the conduit is provided with at least one inlet each of the inlets comprise a face area defining a plane which is arranged substantially parallel with the surface of the exhaust gas channel.

According to another embodiment the conduit is in connection via a pumping means with upstream side of the turbine section of the at least one turbo charger unit.

According to another embodiment the conduit is in connection with downstream side of the turbine section of the at least one turbo charger unit.

According to another embodiment the fuel processing unit in the conduit is provided with a by-pass conduit.

According to another embodiment the fuel processing unit is an oxidizing catalyst unit.

According to another embodiment that the conduit is arranged to extend into the vicinity of the exhaust valve in the exhaust gas system from outside the cylinder head.

According to an embodiment of the invention to conduit comprises more than one inlet and each of the inlets of the conduit comprise a face area defining a plane which is arranged parallel with the surface of the exhaust gas channel.

According to another embodiment of the invention that the conduit is provided with a pumping means.

According to another embodiment of the invention the conduit is provided with a valve and the conduit is arranged to operate as a waste gate of the turbocharger unit.

According to an embodiment of the invention the inlet of the conduit is, when being installed to an engine, arranged to open into the exhaust gas channel at a longitudinal location being nearer to the inlet of the exhaust gas channel than the outlet of the exhaust gas channel.

According to an embodiment of the invention the body part is a flange-like element.

According to another embodiment of the invention the inlet comprises a face area defining a plane which is arranged to at an angle with the surface of the exhaust gas channel. The cross sectional area and the form of the inlet are interrelated and are selected so that so that they together form an ejector-like effect. Thus, while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a oxidizing unit arranged to the conduit.

Suitable angle may be defined by simple experiments for used engine configuration i.e. mechanical layout and dimensions of the exhaust gas channel and exhaust valve, as well as fluid mechanics relating to exhausting the combustion gases.

According to an embodiment of the invention the cross sectional area of the conduit or total cross sectional area, in case of multiple conduits, is 1 - 25 % of the cross sectional area of the exhaust gas channel at the location of the inlet of the conduit.

According to another embodiment of the invention the total cross sectional area is 3 - 15 % of the cross sectional area of the exhaust gas channel at the location of the inlet of the conduit.

According to still another embodiment of the invention the total cross sectional area is 5 - 10 % of the cross sectional area of the exhaust gas channel at the location of the inlet of the conduit.

Objects of the invention are substantially met also by method of upgrading an internal combustion piston engine with at least one turbo charger according to claim 7.

According to an embodiment of the invention the conduit is inserted into the exhaust system by adapting the exhaust system so that an inlet of the conduit is located in the vicinity of the exhaust valve and the outlet of the conduit is brought outside the exhaust gas system.

According to an embodiment of the invention a coupling between the cylinder head and the exhaust gas system is uncoupled at one location of each cylinder and the conduit is inserted into the location.

According to an embodiment of the invention the conduit for collecting a portion of exhaust gas flow is inserted into each cylinder head and the exhaust gas system.

The invention has several benefits of which some are mentioned in the following:
- Higher methane concentration increases the temperature in the oxidizing unit and further improves the reduction.
- The oxidizing unit will be smaller and hereby less space consuming.
- The oxidizing unit can be placed off the engine.
- Oxidizing unit can easily be bypassed.
- should the oxidation be enhanced post combustion can be arranged in a feasible way compared to for the whole exhaust gas stream.

### Brief Description of Drawings

In the following, the invention will be described with reference to the accompanying exemplary, schematic drawings, in which
- Figure 1 illustrates an internal combustion piston engine according to an embodiment of the invention,
- Figure 2 illustrates an internal combustion piston engine according to another embodiment of the invention,
- Figure 3 illustrates a cylinder head for internal combustion piston engine not according to the invention,
- Figure 4 illustrates operation of a cylinder head for internal combustion piston engine not according to the invention, and
- Figure 5 illustrates a cylinder head for internal combustion piston engine not according to the invention,
- Figure 6 illustrates a cylinder head for internal combustion piston engine not according to the invention,
- Figure 7 illustrates an arrangement according to an embodiment of the invention in a cylinder head for internal combustion piston engine,
- Figure 8 illustrates an arrangement according to an embodiment of the invention in a cylinder head for internal combustion piston engine, and
- Figure 9 illustrates an arrangement according to an embodiment of the invention in a cylinder head for internal combustion piston engine.

### Detailed Description of Drawings

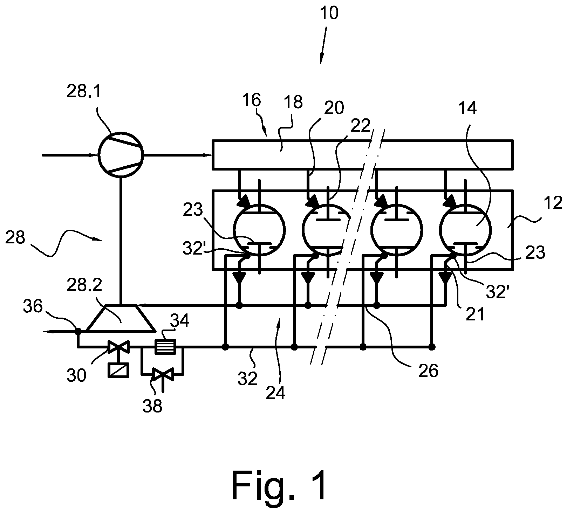

Figure 1 depicts schematically an internal combustion piston engine 10, which is called simply as an engine in the following. The engine comprises a body 12 or a block into which various parts of the engine known as such have been assembled or otherwise constructed. The engine is provided with at least two cylinders 14, which may be arranged e.g. in V-configuration or as in-line engine like the case is in figure 1. The engine is also provided with an arrangement for reducing fuel material slip into the atmosphere.

The engine is provided with a charge air system 16 having a combustion air receiver 18 which is in connection with the cylinders through channels 20 and inlet valves 22. The engine is also provided with an exhaust gas system 24 having an exhaust gas manifold 26 which is in connection with the cylinders through channels 21 and exhaust valves 23. It should be noted that the number of inlet and exhaust valves in each cylinder may be more than one. The inlet side channels 20 and the exhaust side channels 21 as well as the valves are arranged to cylinder heads (not shown in figure 1). There is also a turbocharger unit 28 arranged in connection with the engine 10. A combustion chamber of each cylinder 14 of the engine is controllably connected to the atmosphere by means of an exhaust valve or valves 23 via a turbine section 28.2 of the turbo charger unit 28 in the exhaust gas system 24.

Now, it has been discovered that in engines in which fuel is premixed to the combustion air, particularly in gas engines, a majority of the unburned fuel material, i.e. methane slip in engines operated with gaseous fuel, concentrates in the portion of the exhaust gases leaving the cylinder last during the exhaust event when the exhaust valve(s) is open and the exhaust gas leaves the combustion chamber in the cylinder 14. Thus, the engine is provided with a flow path 32, by means of which the mentioned portion of the exhaust gas may be collected and processed separately from the main stream of the exhaust gas. The flow path comprises a conduit by means of which a flow communication from the exhaust gas system 24 in the vicinity of the exhaust valve to the exhaust gas system through a fuel processing unit 34 is provided. In some occasions in this description the flow path is also referred to by the reference number 32. The conduit 32 is at least partly parallel to the exhaust gas system 24 and the exhaust manifold 26. Additionally the flow path and the conduit may be integrated into the parts of the engine 10.

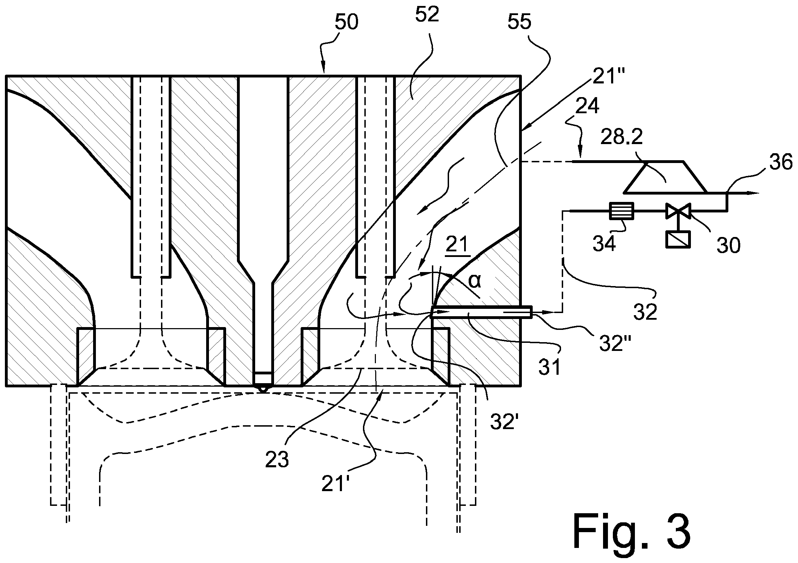

The conduit is provided with inlets 32' which open into a space in the vicinity of the exhaust valve 23 of each cylinder at a side opposite to the combustion chamber i.e. the inlets 32' open into the channel 21 in the cylinder head (Figs 3-8). In the embodiment of figure 1 the conduit 32 is arranged to join the exhaust gas system downstream side of the turbine section 28.2 through an outlet 36. In order to provide processing of higher concentration unburned fuel material the conduit is provided with a processing unit 34 between its inlets 32' and outlet 36. According to an embodiment of the invention the processing unit 34 comprises an oxidation catalyst unit.

Advantageously the engine is provided with a waste gate 30 arranged to the conduit 32 by means of which an air coefficient may be controlled in gas operation of the engine. The waste gate 30 bypasses part of the exhaust gas over the exhaust gas turbine in order to control the operation of the compressor part 28.1 so that desired amount of compressed air is introduced into the engine. Typically the waste gate stream is in the range of 5-15 % of the total exhaust gas stream depending e.g. on altitude and inlet air temperature upstream the compressor.

According to the invention the portion of exhaust gas led into the processing unit is taken out separately from the main stream of exhaust gas at a location after the exhaust gas valve of each cylinder.

When the engine is operated fuel material slip to the atmosphere is reduced so that a portion of the exhaust gases from stream of combustion gases is arranged to flow through the conduit 32 to a processing unit in which the unburned fuel is oxidized. Due to the location of the inlets 32' in the vicinity of the exhaust valve of each cylinder at a side opposite to the combustion chamber the exhaust gases are caused to flow into the conduit 32 from each cylinder controlled or ruled by the position of the exhaust valves 23. This is accomplished so that while the exhaust valve or valves of a cylinder head are open, static pressure of the exhaust gas is decreased while dynamic pressure is increased in vicinity of the inlet 32' of the conduit due to the radically increased exhaust gas velocity. Decreasing of the static pressure compensates the pressure difference over the turbine part 28.2 in the exhaust gas system 24. Thus the flow of exhaust gas into the conduit 32 is decreased or stopped. This phenomenon is also effected by the shape and orientation of the inlet 32' in respect to the flow direction of the exhaust gas.

While the exhaust valve or valves are closed the static pressure of the exhaust gas is increased in vicinity of the inlet of the conduit thus increasing the flow of exhaust gas into the conduit. Now the portion of exhaust gases from stream of combustion gases flow through the conduit 32 and fuel material remaining in the portion of the exhaust gases is oxidized by means of the fuel oxidizing unit 34 in the conduit 32. According to an embodiment of the invention the fuel oxidizing unit comprises an oxidation catalyst.

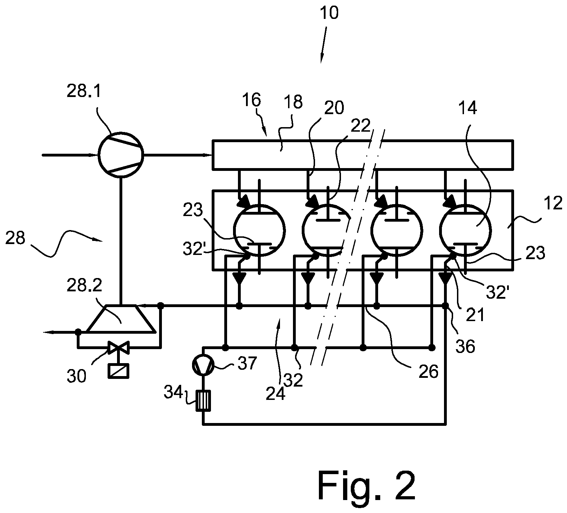

In figure 2 there is shown another embodiment of the invention. It is in other respects corresponding to that of figure 1 except that the conduit 32 is arranged to join the exhaust gas system upstream side of the turbine section 28.2 through the outlet 36 forming the flow path. Adequate gas flow through the fuel processing unit can be maintained by a separate pumping means 37 such as a compressor that returns the flow back to the high pressure side of the turbine section 28.2 of the turbo charger. In this embodiment it is possible to control the oxidation circumstances in the processing unit very efficiently so that optimal portion of exhaust gas is controlled to pass through the unit. According to an embodiment of the engine the pumping means is provided with a speed control system for accurate controlling. The pumping means may be operated by an exhaust gas turbine (not shown).

In an embodiment where the processing unit is an oxidation catalyst unit regeneration of the catalyst is possible to perform by injection of combustible gas upstream the catalyst during the operation and the heat generated may be efficiently utilized by the turbine section 28.2.

Also in case of a disturbance situation, for example if risk of damages of the oxidizing unit, the pumping means may be even stopped. Additionally it is possible to omit a by-pass over the oxidizing unit. The waste gate 30 may be located normally i.e. bypassing the turbine.

In figure 3 there is shown a cylinder head 50 not according to the invention, for an internal combustion piston engine. It comprises a body part 52 into which an exhaust gas channel 21 is arranged to extend between its inlet 21' and its outlet 21", and in which the inlet is adapted to receive an exhaust valve 23 to be assembled thereto. And, at a region of which outlet the cylinder head includes connecting means, such as a flange, for connecting the exhaust gas channel to an exhaust gas system of an internal combustion piston engine. The cylinder head 50 is provided with a passage 31, having an inlet 32' and an outlet 32". The inlet opens into the exhaust gas channel 21 between the inlet and the outlet thereof for collecting and processing a portion of the exhaust gas. The passage is connected to the conduit 32 providing the flow path from the vicinity of the exhaust valve to the fuel processing unit 34.

Figure 3 shows the operation of the arrangement when the exhaust valve 23 is closed, The pressure prevailing in the exhaust system 24 upstream the turbine section 28.2 effects also to the exhaust gas channel 21. Since the conduit 32 is in connection (when the cylinder head is installed to an engine) with downstream side of the turbine section there is a pressure difference between the passage 31 and the downstream side of the turbine section. This way the exhaust gas containing possible unburned fuel is collected by the conduit 32 and led to the fuel processing unit such as an oxidation catalyst 34 arranged to the conduit as well.

In order to set the operation of the conduit as desired the inlet comprises a face area defining a plane which is arranged to at an angle α with the surface of the exhaust gas channel 21. Cross sectional area and the angle are interrelated and are selected so that so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a catalyst unit arranged to the conduit.

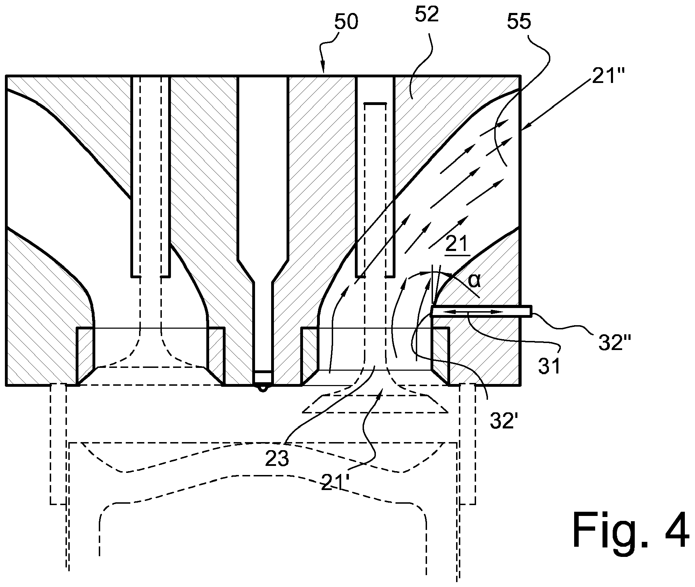

In figure 4 there is shown the operation of the arrangement not according to the invention, when the exhaust valve 23 is open. By arranging the angle with which the conduit is connected to the exhaust gas channel 21 the suction in channel 21 caused by the high gas velocity passing over the inlet 32' will compensate for the pressure difference over the turbine part 28.2. In this way the flow into the conduit 32 can be kept low or even stopped when the exhaust gas valve is open. Considering that the valve is closed about 80 % of the time the gases exiting the cylinder last can be collected separately into the waste gate channel effectively.

The oxidation catalyst 34 may be placed upstream the waste gate 30, or downstream the waste gate, as engine mounted or off the engine. A controllable bypass 38 (figure 1) over the oxidation catalyst can also easily be arranged with this solution. In addition to the oxidation catalyst 34 in the conduit 32 the exhaust gas system 24 may be provided with a catalyst system of its own.

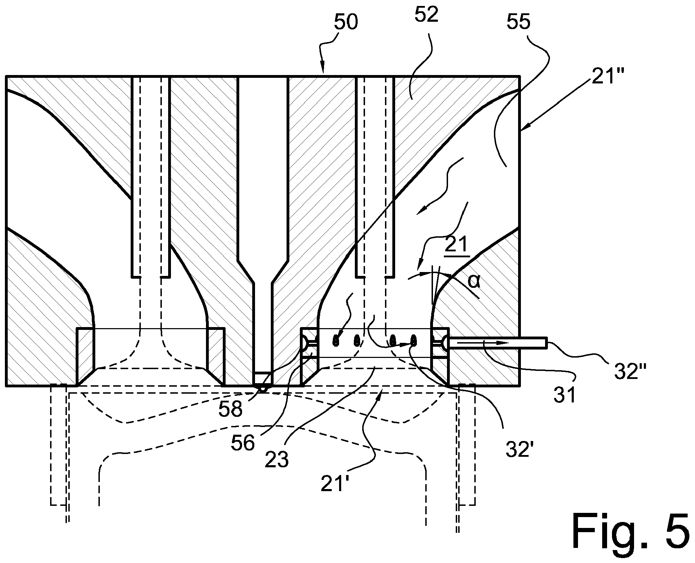

As shown in the embodiment not according to the invention, of figure 5 the inlet 32' of the conduit comprises more than one opening. The openings are arranged to rim of a ring element 56 having an annular groove 58 to which the openings are arranged to open at the back surface of the ring element. The groove in turn is in connection with the conduit 32. Thus the ring element forms an extension of the conduit 32. The openings are each at the same longitudinal location. In this case the cross sectional area is the total cross sectional area of the openings. The openings are provided with a sloped recess to provide an ejector - like effect.

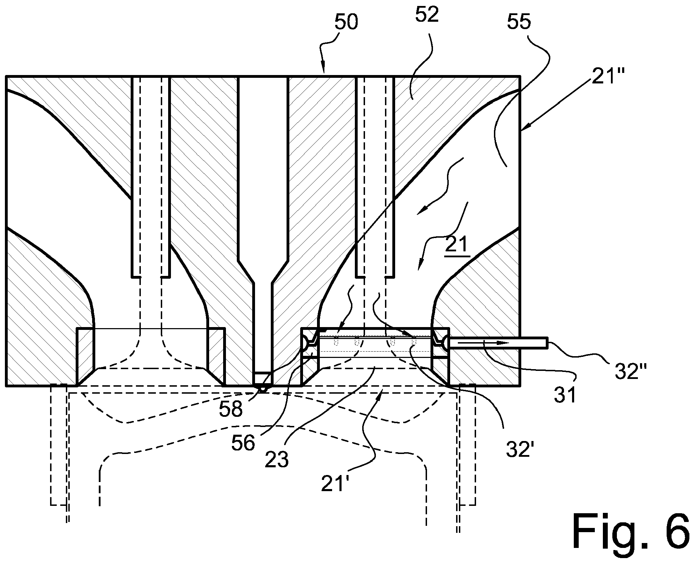

In the embodiment not according to the invention, of figure 6 the inlet 32' of the conduit comprise one slot-like opening into which several conduits are arranged to open. The slot is arranged at the rim of a ring element 56. The slot provides an ejector - like effect. Thus also in this embodiment the ring element forms an extension of the conduit 32.

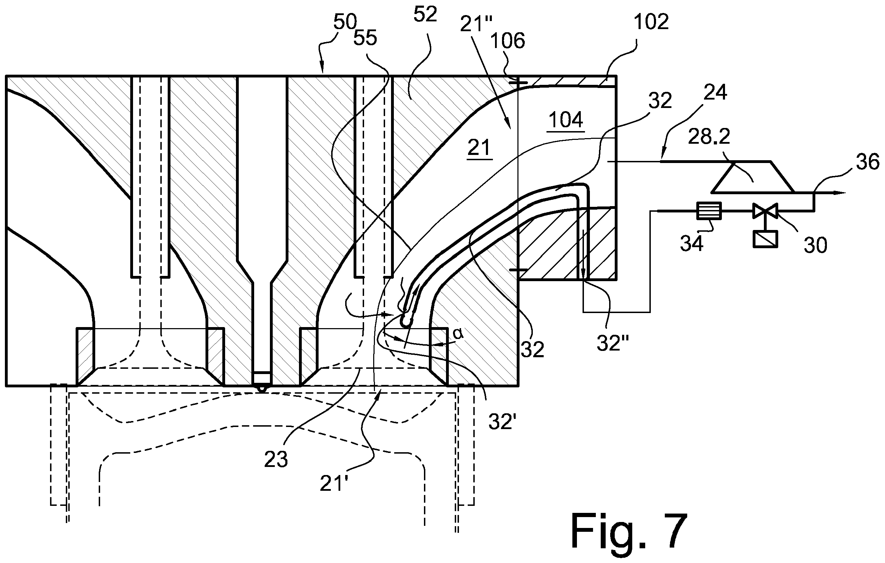

The operation of another embodiment of the invention in the vicinity of the inlet 32' is described in more detailed manner with the reference to figure 7 which schematically illustrates a cylinder head 50 for an internal combustion piston engine. The cylinder head comprises a body part 52 into which auxiliary equipment are arranged. Particularly the body part 52 comprises the exhaust gas channel 21, which is arranged to extend between its inlet 21' and its outlet 21", and in which the inlet 21' is adapted to receive an exhaust valve 23 to be assembled thereto. Since the exhaust valve is not an integral part of the cylinder head it is illustrated by dotted line for understanding the operation of the cylinder head 50 according to the invention. Even if not shown here, the cylinder head 50 includes at a region of the outlet 21" connecting means, such as a flange for connecting the exhaust gas channel 21 of the cylinder head to the exhaust gas system 24 of an internal combustion piston engine.

There is an arrangement for collecting a portion of exhaust gas flow arranged in connection with the cylinder head. It comprises a body 102 into which an exhaust gas flow channel 104 is arranged for leading exhaust gas through the body part. The body 102 is provided with an attachment part 106, such as a flange by means of which the body part is attached to the cylinder head. The body in the figure 7 is a flange-like element. As can be seen from the figure 7 the body part is in connection with exhaust gas channel 21 of the cylinder head and an exhaust gas system 24 of the internal combustion piston engine.

The arrangement further comprises a conduit 32, having an inlet 32', the inlet opening into the exhaust gas flow channel 21 for collecting and processing a portion of the exhaust gas separately. The conduit 32 has also an outlet 32" via which the inlet 32' is in second connection with the exhaust gas system 24 of the engine. The conduit 32 is arranged to extend via the exhaust gas system into the vicinity of the exhaust valve. In other words the conduit is provided with an extension part extending into the exhaust gas flow channel 21 out of the body 102.

In figure 7 there is shown the operation of the arrangement when the exhaust valve 23 is closed. Thus the pressure prevailing in the exhaust system 24 upstream the turbine section 28.2 effects also to the exhaust gas channel 21 in the cylinder head. Since the conduit is also in this embodiment in connection with downstream side of the turbine section the pressure at the location of the inlet 32' is higher than at downstream side of the turbine section. This way the exhaust gas containing possible unburned fuel is collected by the conduit 32 and led to the oxidizing unit 34 arranged to the conduit as well.

In order to set the operation of the conduit as desired the inlet in the conduit 32 comprises a face area defining a plane which is arranged at an angle α with the surface of the exhaust gas channel 21. Cross sectional area and the angle are interrelated and are selected so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a oxidizing unit arranged to the conduit. This is accomplished so that while the exhaust valve or valves of a cylinder head are open, static pressure of the exhaust gas is decreased while dynamic pressure is increased in vicinity of the inlet 32' of the conduit due to the radically increased exhaust gas velocity. Decreasing of the static pressure compensates the pressure difference over the turbine part 28.2 in the exhaust gas system 24. Thus the flow of exhaust gas into the conduit 32 is decreased or stopped.

The total cross sectional area of the conduit 32 in the cylinder head is 1-25% of the exhaust gas channel 21 at the location of the conduit inlet 21'. The conduit may comprise more than one inlet 32" openings.

The inlet 32' of the conduit is, by means of its extension part, arranged to open into the exhaust gas channel at a longitudinal location being nearer to the inlet 21' of the exhaust gas channel 21 than the outlet 21" of the exhaust gas channel. This way the methane slip concentrated in the portion of the exhaust gases leaving the cylinder last may be effectively collected.

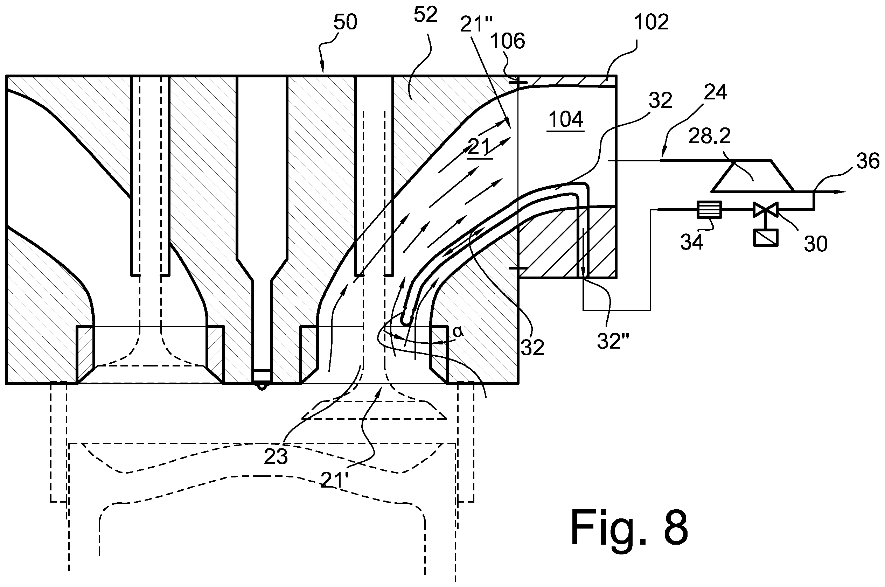

In figure 8 there is shown the operation of the arrangement in connection with the cylinder head when the exhaust valve 23 is open. By arranging the angle with which the conduit is connected to the exhaust gas channel 21 the suction in channel 21 caused by the high gas velocity passing over the inlet 32' will compensate for the pressure difference over the turbine part 28.2. In this way the flow into the conduit 32 can be kept low or even stopped when the exhaust gas valve is open. Considering that the valve is closed about 80 % of the time the gases exiting the cylinder last can be collected separately into the waste gate channel effectively.

The oxidizing unit 34 may be placed upstream the waste gate 30, or downstream the waste gate, as engine mounted or off the engine. A controllable bypass 38 (figure 1) over the oxidizing unit can also easily be arranged with this solution if needed. In addition to the oxidizing unit 34 in the conduit 34 the exhaust gas system 24 may be provided with a catalyst system of its own.

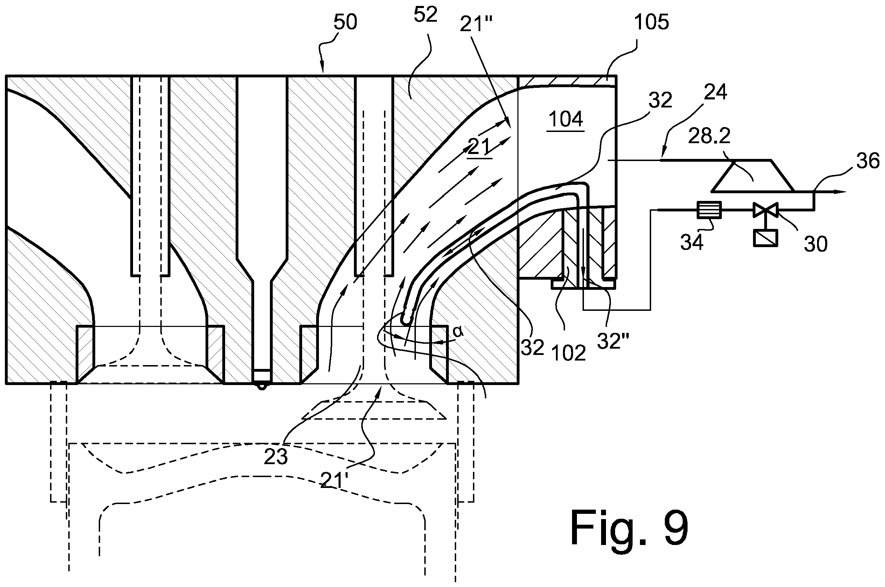

In figure 9 there is shown another embodiment of the invention. There is an arrangement for collecting a portion of exhaust gas flow arranged in connection with the cylinder head. It comprises a body 102 which is provided with a threaded attachment part 106 by means of which the body part is attached to hole in a part 105 of the exhaust gas system 24. The body 102 in the figure 9 is a sleeve element.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. Arrangement for reducing fuel material slip to the atmosphere in an internal combustion piston engine (10) with at least two cylinders (14) and at least one turbo charger unit (28), and an exhaust gas system (24) having an exhaust gas manifold (26) which is in connection with the cylinders through channels (21), the exhaust gas system (24) being arranged to connect a combustion chamber of each cylinder of the engine controllably by means of an exhaust valve or valves (23) in a cylinder head (50) to the atmosphere via a turbine section (28.2) of the at least one turbo charger unit (28), the arrangement comprising a fuel processing unit (34) for oxidation of fuel material in the exhaust gas of the engine, **characterized in that** the arrangement further comprises an attachment part (106) by means of which a body (102) of an arrangement for collecting a portion of exhaust gas flow is attached to the cylinder head (50) and a conduit (32) by means of which a flow communication is provided from the channel (21) of the exhaust gas system (24) in the vicinity of the exhaust valve to the fuel processing unit (34) and that the conduit (32) is arranged to extend through the body (102) and at least partly via the channel (21) of the exhaust gas system into the vicinity of the exhaust valve, and that the conduit (32) having an inlet (32'), which the inlet (32') is opening into the exhaust gas flow channel (21) for collecting and processing the portion of the exhaust gas separately, and that the conduit is at least partly parallel to the channel (21) of exhaust gas system (24).

2. Arrangement according to claim 1, **characterized in that** the conduit (32) is in connection via a pumping means (37) with upstream side of the turbine section (28.2) of the at least one turbo charger unit.

3. Arrangement according to claim 1, **characterized in that** the conduit (32) is in connection with downstream side of the turbine section (28.2) of the at least one turbo charger unit (28).

4. Arrangement according to claim 1, **characterized in that** the fuel processing unit (34) in the conduit (32) is provided with a by-pass conduit (38).

5. Arrangement according to claim 1, **characterized in that** the fuel processing unit (34) is an oxidizing catalyst unit.

6. Arrangement according to claim 1, **characterized in that** the conduit (32) is arranged to extend into the vicinity of the exhaust valve (23) in the exhaust gas system from outside the cylinder head (50).

7. Method of upgrading an internal combustion piston engine (10) with at least one turbo charger unit (28), the engine (10) further comprising at least two cylinders (14) with a cylinder head (50), and an exhaust gas system (24) having an exhaust gas manifold (26) which is in connection with the cylinders through channels (21), the exhaust gas system (24) being coupled to the cylinder heads, in which method an arrangement for collecting a portion of exhaust gas flow, comprising a body (102) provided with an attachment part (106) by means of which the body (102) is attached to the cylinder head, such that a conduit (32) is inserted into the exhaust system (24) and the conduit (32) is arranged to extend into the vicinity of the exhaust valve (23) at least partly via the channel (21) of the exhaust gas system (24) of the engine (10), and that the conduit (32) having an inlet (32'), which the inlet (32') is arranged to open into the exhaust gas flow channel (21) for collecting a portion of exhaust gas flow at the location vicinity of the exhaust valve (23), and a fuel processing unit (34) is arranged in flow connection with the conduit (32).

8. Method according to claim 7, **characterized in that** the conduit (32) is inserted into the channel (21) of exhaust system (24) by adapting the exhaust system so that an inlet (32') of the conduit is located in the vicinity of the exhaust valve and the outlet (36) of the conduit is brought outside the channel (21) of exhaust gas system (24).

9. Method according to claim 7, **characterized in that** a coupling between the cylinder head (50) and the exhaust gas system (24) is uncoupled at one location of each cylinder and the conduit (32) is inserted into the location.

10. Method according to claim 7 or 8, **characterized in that** the conduit (32) for collecting a portion of exhaust gas flow is inserted into each cylinder head (50) and the exhaust gas system.

## Patentansprüche

1. Anordnung zur Reduzierung von Kraftstoffverlust in die Atmosphäre in einer Kolbenverbrennungskraftmaschine (10) mit mindestens zwei Zylindern (14) und wenigstens einer Turboladereinheit (28), und ein Abgasauslasssystem (24), das einen Auspuffkrümmer (26) aufweist, der mit den Zylindern durch Kanäle (21) verbunden ist, wobei das Abgasauslasssystem (24) dazu eingerichtet ist, eine Brennkammer jedes Zylinders der Maschine mittels eines oder mehrerer Abgasauslassventile (23) in einem Zylinderkopf (50) über einen Turbinenabschnitt (28.2) der wenigstens einen Turboladereinheit (28) regelbar mit der Atmosphäre zu verbinden, wobei die Anordnung eine Kraftstoffaufbereitungseinheit (34) zur Oxidation von Kraftstoff in dem Abgas der Maschine enthält, **dadurch gekennzeichnet, dass** die Anordnung ferner ein Befestigungsteil (106), über das ein Körper (102) einer Anordnung zum Aufnehmen eines Teils des Abgasstroms an dem Zylinderkopf (50) angebracht wird, und eine Leitung (32) aufweist, durch die eine Strömungsverbindung von dem Kanal (21) des Abgasauslasssystems (24) in der Nähe des Abgasauslassventils zu der Kraftstoffaufbereitungseinheit (34) vorgesehen ist, und dass die Leitung (32) dafür ausgelegt ist, sich durch den Körper (102) hindurch und zumindest teilweise über den Kanal (21) des Abgasauslasssystems in die Nähe des Abgasauslassventils zu erstrecken, und dass die Leitung (32) einen Einlass (32') aufweist, wobei sich der Einlass (32') in den Abgasstromkanal (21) öffnet, um den Teil des Abgases getrennt aufzunehmen und aufzubereiten, und dass die Leitung zumindest teilweise zu dem Kanal (21) des Abgasauslasssystems (24) parallel verläuft.

2. Anordnung nach Anspruch 1, **dadurch gekennzeichnet, dass** die Leitung (32) durch ein Pumpmittel (37) mit einer stromaufwärtigen Seite des Turbinenabschnitts (28.2) der wenigstens einen Turboladereinheit verbunden ist.

3. Anordnung nach Anspruch 1, **dadurch gekennzeichnet, dass** die Leitung (32) mit einer stromabwärtigen Seite des Turbinenabschnitts (28.2) der wenigstens einen Turboladereinheit (28) verbunden ist.

4. Anordnung nach Anspruch 1, **dadurch gekennzeichnet, dass** die Kraftstoffaufbereitungseinheit (34) in der Leitung (32) mit einem Nebenstromkanal (38) versehen ist.

5. Anordnung nach Anspruch 1, **dadurch gekennzeichnet, dass** die Kraftstoffaufbereitungseinheit (34) eine oxidierende Katalysatoreinheit ist.

6. Anordnung nach Anspruch 1, **dadurch gekennzeichnet, dass** die Leitung (32) dafür ausgelegt ist, sich von der Außenseite des Zylinderkopfs (50) her in die Nähe des Abgasauslassventils (23) in dem Abgasauslasssystem zu erstrecken.

7. Verfahren zur Verbesserung einer Kolbenverbrennungskraftmaschine (10) mit wenigstens einer Turboladereinheit (28), wobei die Maschine (10) ferner mindestens zwei Zylinder (14) mit einem Zylinderkopf (50) und ein Abgasauslasssystem (24) mit einem Auspuffkrümmer (26) aufweist, der durch Kanäle (21) mit den Zylindern verbunden ist, wobei das Abgasauslasssystem (24) mit den Zylinderköpfen verbunden ist, wobei in dem Verfahren eine Anordnung zum Aufnehmen eines Teils des Abgasstroms einen Körper (102) aufweist, der mit einem Befestigungsteil (106) versehen ist, durch das der Körper (102) an dem Zylinderkopf angebracht wird, so dass eine Leitung (32) in das Abgasauslasssystem (24) eingeführt wird, und die Leitung (32) dafür ausgelegt ist, sich zumindest teilweise über den Kanal (21) des Abgasauslasssystems (24) der Maschine (10) in die Nähe des Abgasauslassventils (23) zu erstrecken, und dass die Leitung (32) einen Einlass (32') aufweist, wobei der Einlass (32') dazu eingerichtet ist, sich in den Abgasstromkanal (21) zu öffnen, um einen Teil des Abgasstroms an dem Ort nahe der Umgebung des Abgasauslassventils (23) aufzunehmen, und eine Kraftstoffaufbereitungseinheit (34) in strömungsmäßiger Verbindung mit der Leitung (32) angeordnet ist.

8. Verfahren nach Anspruch 7, **dadurch gekennzeichnet, dass** die Leitung (32) in den Kanal (21) des Abgasauslasssystems (24) eingesetzt wird, indem das Abgasauslasssystem angepasst wird, so dass ein Einlass (32') der Leitung in der Nähe des Abgasauslassventils angeordnet ist, und der Auslass (36) der Leitung außerhalb des Kanals (21) des Abgasauslasssystems (24) verlegt ist.

9. Verfahren nach Anspruch 7, **dadurch gekennzeichnet, dass** eine Verbindung zwischen dem Zylinderkopf (50) und dem Abgasauslasssystem (24) an einem Ort jedes Zylinders gelöst wird, und die Leitung (32) in den Ort eingeführt wird.

10. Verfahren nach Anspruch 7 oder 8, **dadurch gekennzeichnet, dass** die Leitung (32) zum Aufnehmen eines Teils des Abgasstroms in jeden Zylinderkopf (50) und in das Abgasauslasssystem eingeführt wird.

## Revendications

1. Agencement pour réduire l'échappement d'un matériau combustible dans l'atmosphère dans un moteur à piston à combustion interne (10) avec au moins deux cylindres (14) et au moins une unité de turbocompresseur (28) et un système de gaz d'échappement (24) ayant un collecteur de gaz d'échappement (26) qui est en liaison avec les cylindres via des canaux (21), le système de gaz d'échappement (24) étant disposé pour raccorder une chambre de combustion de chaque cylindre du moteur de façon réglable au moyen d'une soupape d'échappement ou de soupapes d'échappement (23) dans une tête de cylindre (50) vers l'atmosphère via une section de turbine (28.2) d'au moins une unité de turbocompresseur (28), l'agencement comprenant une unité de traitement de combustible (34) pour l'oxydation d'un matériau combustible dans le gaz d'échappement du moteur,
**caractérisé en ce que** l'agencement comprend en outre une partie de fixation (106) au moyen de laquelle un corps (102) d'un agencement pour collecter une partie du flux de gaz d'échappement est fixé à la tête de cylindre (50), et un conduit (32) au moyen duquel une communication fluidique est fournie depuis le canal (21) du système de gaz d'échappement (24) à proximité de la soupape d'échappement jusqu'à l'unité de traitement de combustible (34),
et **en ce que** le conduit (32) est disposé pour s'étendre à travers le corps (102), et au moins partiellement via le canal (21) du système de gaz d'échappement, jusqu'à proximité de la soupape d'échappement, et **en ce que** le conduit (32) a une entrée (32'), laquelle entrée (32) s'ouvre dans le canal de flux de gaz d'échappement (21) pour collecter et traiter séparément la partie du gaz d'échappement, et **en ce que** le conduit est au moins partiellement parallèle au canal (21) du système de gaz d'échappement (24).

2. Agencement selon la revendication 1, **caractérisé en ce que** le conduit (32) est en liaison, via un moyen de pompage (37), avec le côté amont de la section de turbine (28.2) de l'au moins une unité de turbocompresseur.

3. Agencement selon la revendication 1, **caractérisé en ce que** le conduit (32) est en liaison avec le côté aval de la section de turbine (28.2) de l'au moins une unité de turbocompresseur (28).

4. Agencement selon la revendication 1, **caractérisé en ce que** l'unité de traitement de combustible (34) dans le conduit (32) est dotée d'un conduit de dérivation (38).

5. Agencement selon la revendication 1, **caractérisé en ce que** l'unité de traitement de combustible (34) est une unité de catalyseur d'oxydation.

6. Agencement selon la revendication 1, **caractérisé en ce que** le conduit (32) est disposé pour s'étendre jusqu'à proximité de la soupape d'échappement (23) dans le système de gaz d'échappement depuis l'extérieur de la tête de cylindre (50).

7. Procédé d'amélioration d'un moteur à piston à combustion interne (10) avec au moins une unité de turbocompresseur (28), le moteur (10) comprenant en outre au moins deux cylindres (14) avec une tête de cylindre (50), et un système de gaz d'échappement (24) ayant un collecteur de gaz d'échappement (26) qui est en liaison avec les cylindres via des canaux (21), le système de gaz d'échappement (24) étant accouplé aux têtes de cylindre, dans lequel procédé un agencement pour collecter une partie du flux de gaz d'échappement comprend un corps (102) doté d'une partie de fixation (106) au moyen de laquelle le corps (102) est fixé à la tête de cylindre de manière à ce qu'un conduit (32) soit inséré dans le système d'échappement (24), et le conduit (32) étant disposé pour s'étendre jusqu'à proximité de la soupape d'échappement (23) au moins en partie via le canal (21) du système de gaz d'échappement (24) du moteur (10), et en ce que le conduit (32) a une entrée (32'), laquelle entrée (32') est disposée pour s'ouvrir dans le canal de flux de gaz d'échappement (21) pour collecter une partie du flux de gaz d'échappement à l'emplacement à proximité de la soupape d'échappement (23), et une unité de traitement de combustible (34) étant disposée en liaison fluidique avec le conduit (32).

8. Procédé selon la revendication 7, **caractérisé en ce que** le conduit (32) est inséré dans le canal (21) du système d'échappement (24) en adaptant le système d'échappement de manière à ce qu'une entrée (32') du conduit soit située à proximité de la soupape d'échappement et que la sortie (36) du conduit soit amenée à l'extérieur du canal (21) du système de gaz d'échappement (24).

9. Procédé selon la revendication 7, **caractérisé en ce qu'**un accouplement entre la tête de cylindre (50) et le système de gaz d'échappement (24) est désaccouplé à un emplacement de chaque cylindre, et que le conduit (32) est inséré dans l'emplacement.

10. Procédé selon la revendication 7 ou 8, **caractérisé en ce que** le conduit (32) pour collecter une partie du flux de gaz d'échappement est inséré dans chaque tête de cylindre (50) et le système de gaz d'échappement.
